# EUROPEAN PATENT APPLICATION

(11) **EP 2 800 335 A1**
(43) Date of publication of application: **05.11.2014**
(21) Application number: 14166572.9
(22) Date of filing: 30.04.2014
(51) Int. Cl.: H04L 29/06, H04L 12/26, H04W 24/00, H04L 29/08

(54) **Network suitability for a streaming device**

(30) Priority: 02.05.2013 US 201361818748 P; 20.05.2013 US 201313897643
(71) Applicant: Google Inc., Mountain View, CA 94043 (US)
(72) Inventor: Bartlett, Scott, Mountain View, CA California 94043 (US)
(74) Representative: Lam, Alvin

(57) **Abstract**

A method and device are provided that analyzes one or more signal metrics to generate a signal measurement. The signal measurement is utilized to indicate whether or not a particular location of the device is suitable for receiving streamed content. A communication module of the device may receive one or more signals from an identified network device. At least one signal metric may be used to generate a signal measurement that may be indicated on an interface component. A recommendation to move the device to a different location may be generated based on the signal measurement. Subsequent to moving the device, a second signal measurement may be determined and indicated on the interface component.

## Description

### FIELD OF THE INVENTION

This invention relates to wireless communications, and more particularly to quality of service techniques implemented within wireless multimedia networks and services.

### BACKGROUND

Content streaming devices, such as a smartphone, a game console, a laptop, or a dedicated audio/video streaming device, may wirelessly provide content to a display, speaker, or an audio/video processor or receiver. A minimum bit rate may be necessary for the content streaming device to meet a quality of service ("QoS") requirement for the content that it is streaming or that has been requested by the user. For example, audio content may require a lower bit rate (e.g., a minimum bit rate of 256kb/s) to provide a user with a minimum QoS. If the same device provides video, a higher bit rate (e.g., a bit rate that is at least ten times higher) may be required to meet the quality of service requirement.

### BRIEF SUMMARY

According to an implementation of the disclosed subject matter, a device is provided that includes a communication module and a processor. The communication module may be configured to receive at least one signal. The processor may be configured to identify a network device. It may receive a signal from the network device from the communication module that is based on a signal from the network device. The processor may be configured to determine at least one metric of the signal selected from: latency, throughput, received signal strength, and error rate. The processor may generate a first signal measurement based on the at least one metric and indicate the first signal measurement using an interface component. The processor may be configured to determine that a first location is sub-optimal based on the signal measurement. It may generate a first recommendation based on the determination that the first location is sub-optimal. The first recommendation may include an indication to move the device. The processor may generate a second signal measurement based on the analysis of the signal at a second location. The processor may indicate the second signal measurement at the second location subsequent to moving the device to the second using the interface component.

Additional features, advantages, and implementations of the disclosed subject matter may be set forth or be apparent from consideration of the following detailed description, drawings, and claims. Moreover, it is to be understood that both the foregoing summary and the following detailed description provide examples of implementations and are intended to provide further explanation without limiting the scope of the claims.

### BRIEF DESCRIPTION OF THE DRAWINGS

The accompanying drawings, which are included to provide a further understanding of the disclosed subject matter, are incorporated in and constitute a part of this specification. The drawings also illustrate implementations of the disclosed subject matter and together with the detailed description serve to explain the principles of implementations of the disclosed subject matter. No attempt is made to show structural details in more detail than may be necessary for a fundamental understanding of the disclosed subject matter and various ways in which it may be practiced.
FIG. 1 shows a computer according to an implementation of the disclosed subject matter.
FIG. 2 shows a network configuration according to an implementation of the disclosed subject matter.

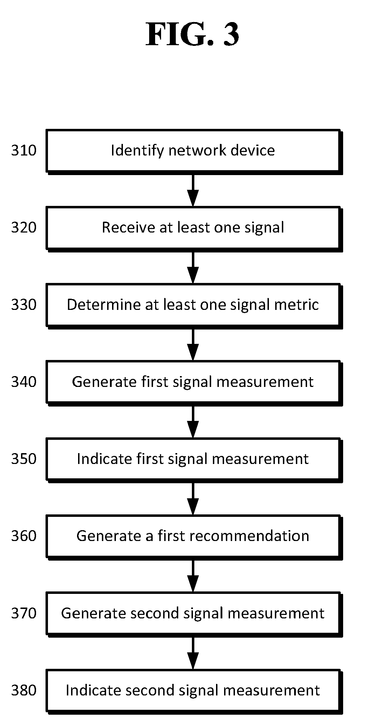

FIG. 3 shows an example process flow according to an implementation disclosed herein.

### DETAILED DESCRIPTION

Wirelessly meeting the QoS requirement or preference (briefly, "meeting the QoS") requested by a user or required by content or by the content distribution system can be challenging because users' environments, devices, and electronic equipment can vary greatly. Implementations in accordance with the disclosed subject matter can improve the positioning of the content streaming device by providing feedback as to whether one or more locations are suitable for the content based on the network conditions at the one or more locations.

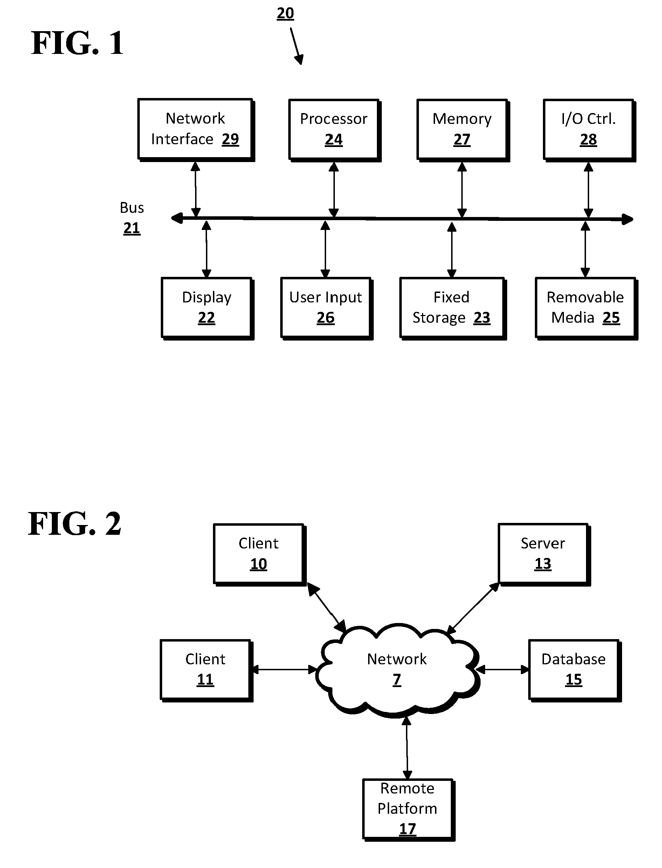

Implementations of the presently disclosed subject matter may be implemented in and used with a variety of component and network architectures. FIG. 1 is an example computer 20 suitable for implementations of the presently disclosed subject matter. The computer 20 includes a bus 21 which interconnects major components of the computer 20, such as a central processor 24, a memory 27 (typically RAM, but which may also include ROM, flash RAM, or the like), an input/output controller 28, a user display 22, such as a display screen via a display adapter, a user input interface 26, which may include one or more controllers and associated user input devices such as a keyboard, mouse, and the like, and may be closely coupled to the I/O controller 28, fixed storage 23, such as a hard drive, flash storage, Fibre Channel network, SAN device, SCSI device, and the like, and a removable media component 25 operative to control and receive an optical disk, flash drive, and the like.

The bus 21 allows data communication between the central processor 24 and the memory 27, which may include read-only memory (ROM) or flash memory (neither shown), and random access memory (RAM) (not shown), as previously noted. The RAM is generally the main memory into which the operating system and application programs are loaded. The ROM or flash memory can contain, among other code, the Basic Input-Output system (BIOS) which controls basic hardware operation such as the interaction with peripheral components. Applications resident with the computer 20 are generally stored on and accessed via a computer readable medium, such as a hard disk drive (e.g., fixed storage 23), an optical drive, floppy disk, or other storage medium 25.

The fixed storage 23 may be integral with the computer 20 or may be separate and accessed through other interfaces. A network interface 29 may provide a direct connection to a remote server via a telephone link, to the Internet via an internet service provider (ISP), or a direct connection to a remote server via a direct network link to the Internet via a POP (point of presence) or other technique. The network interface 29 may provide such connection using wireless techniques, including digital cellular telephone connection, Cellular Digital Packet Data (CDPD) connection, digital satellite data connection or the like. For example, the network interface 29 may allow the computer to communicate with other computers via one or more local, wide-area, or other networks, as shown in FIG. 2.

Many other devices or components (not shown) may be connected in a similar manner (e.g., document scanners, digital cameras and so on). Conversely, all of the components shown in FIG. 1 need not be present to practice the present disclosure. The components can be interconnected in different ways from that shown. The operation of a computer such as that shown in FIG. 1 is readily known in the art and is not discussed in detail in this application. Code to implement the present disclosure can be stored in computer-readable storage media such as one or more of the memory 27, fixed storage 23, removable media 25, or on a remote storage location.

FIG. 2 shows an example network arrangement according to an implementation of the disclosed subject matter. One or more clients 10, 11, such as local computers, smart phones, tablet computing devices, and the like may connect to other devices via one or more networks 7. The network may be a local network, wide-area network, the Internet, or any other suitable communication network or networks, and may be implemented on any suitable platform including wired and/or wireless networks. The clients may communicate with one or more servers 13 and/or databases 15. The devices may be directly accessible by the clients 10, 11, or one or more other devices may provide intermediary access such as where a server 13 provides access to resources stored in a database 15. The clients 10, 11 also may access remote platforms 17 or services provided by remote platforms 17 such as cloud computing arrangements and services. The remote platform 17 may include one or more servers 13 and/or databases 15.

More generally, various implementations of the presently disclosed subject matter may include or be implemented in the form of computer-implemented processes and apparatuses for practicing those processes. Implementations also may be implemented in the form of a computer program product having computer program code containing instructions implemented in non-transitory and/or tangible media, such as floppy diskettes, CD-ROMs, hard drives, USB (universal serial bus) drives, or any other machine readable storage medium, wherein, when the computer program code is loaded into and executed by a computer, the computer becomes an apparatus for practicing implementations of the disclosed subject matter. Implementations also may be implemented in the form of computer program code, for example, whether stored in a storage medium, loaded into and/or executed by a computer, or transmitted over some transmission medium, such as over electrical wiring or cabling, through fiber optics, or via electromagnetic radiation, wherein when the computer program code is loaded into and executed by a computer, the computer becomes an apparatus for practicing implementations of the disclosed subject matter. When implemented on a general-purpose microprocessor, the computer program code segments configure the microprocessor to create specific logic circuits. In some configurations, a set of computer-readable instructions stored on a computer-readable storage medium may be implemented by a general-purpose processor, which may transform the general-purpose processor or a device containing the general-purpose processor into a special-purpose device configured to implement or carry out the instructions. Implementations may be implemented using hardware that may include a processor, such as a general purpose microprocessor and/or an Application Specific Integrated Circuit (ASIC) that implements all or part of the techniques according to implementations of the disclosed subject matter in hardware and/or firmware. The processor may be coupled to memory, such as RAM, ROM, flash memory, a hard disk or any other device capable of storing electronic information. The memory may store instructions adapted to be executed by the processor to perform the techniques according to implementations of the disclosed subject matter.

A content streaming device may connect to a user's network device (e.g., access point or router) and receive signals from the network device. The received signals can include content streamed from the network device to the content streaming device, where the streamed content may be displayed to a user. The quality of the signals received at the content streaming device may be determined using a metric such as latency, through put, received signal strength, and/or error rate. The quality of the signal may be communicated by a display that is on the content streaming device, an audible sound, one or more LEDs, or a connection to an external device (e.g., a display). The signal quality at the present location of the content streaming device may be unsuitable for a specified content. The network device may instruct the user to move the content streaming device. In some configurations the content streaming device may have a pre-programmed test pattern that asks the user to move the device around a room to different positions. In some configurations, the content streaming device may store the results of the signal analysis for each location and, once the user is finished testing different locations, indicate to the user which of the locations provided the optimal signal quality. The signal analysis may be performed dynamically, at specified intervals or periodically, or as requested. The signal analysis may be associated with a timestamp or the format of the content. For example, a FLAC audio file may require a higher bit rate than a MP3 format audio file. If a music library is streamed to the device, the device may indicate that it lacks a minimum quality of service to provide the FLAC file. In some configurations it may skip playing files for which it lacks the threshold level of service. In some configurations the user may configure the content streaming and/or network device's actions when it encounters content for which it lacks the threshold level of service. For example, the content streaming device may play only the audio portion of a streamed video, the network device may boost signal strength, etc.

The analysis may also indicate that the user's Internet connection is not suitable for some forms of content. For example, if the user has a 128kb/s DSL connection, the user's internet connection is not capable of providing enough bandwidth to accommodate a 1080P video stream. The content streaming device may indicate that the user needs to upgrade the internet connection before streaming such content is possible. It may also suggest service providers who offer suitable internet service in the user's area. In some configurations, the content streaming device may recommend needs to use 5 GHz for wireless internet instead of 2.4 GHz.

In an implementation, a device is provided that contains a communication module and a processor. The communication module may be configured to receive at least one signal. For example, a network device may transmit a signal. A signal may include radio waves transmitted by a network device, for example, and/or the information transmitted by the radio waves. A signal may be multiplexed or combined with a carrier signal or wave. For example, a signal may be transmitted at several frequencies simultaneously. A filter may be utilized to discriminate between the frequencies. A signal may also be transmitted by a wired source in some configurations. Other wireless communications techniques (e.g., Bluetooth, near field communication, etc.) may be used and/or transmit a signal according to implementations disclosed herein. The processor may be configured to identify a network device at **310.** A network device may be, for example a network access point, a wireless router, or the like.

The processor may be configured to receive at least one signal from the network device at **320.** As described above, the signal may be transmitted by the network device in the form of radio waves and may refer to the information transmitted by the radio waves. The processor may receive by the communication module the one or more signals from the network device. The communication module may be connected to one or more antennas on the device and, more than one communication module may be present in a device (e.g., one communication module per antenna). The antennas may be configured to receive radio signals at more than one frequency. The communication module may be responsible for converting the received signals into a digital format. The communication module may be a separate component from the one or more antennas or it may be integrated with the one or more antennas. For example of how a signal may be processed or received by the device, a network access point (e.g., network device) may transmit at a frequency of 5GHz and have a data transmission rate of 300 Mbit/s. The access point may contain hardware directed to amplifying and/or transducing a signal. Data packets may be transmitted by the network device and received by antennas integrated with the communication module. The data may be converted to a digital format by the processor using a separate analysis module or by the communication module. The data may be stored in temporary memory such as RAM. The device may utilize a separate short term memory or persistent memory module such as EEPROM or flash memory to store an instruction, a configuration, a datum, or the like.

At least one metric of the signal may be determined at **330.** A metric may include, for example, latency, throughput, received signal strength ("RSSI"), and error rate. Other signal metrics such as jitter, packet loss, bit rate, etc. may be used according to implementations disclosed herein. For example, using TCP, data are transmitted in packets that are composed of octet segments. A16-bit checksum is determined for each octet. The receiving device may determine whether the checksum matches what was transmitted and, if not, it may discard the packet and/or request a new transmission containing the data. A packet error rate may be determined by computing the number of packets containing an error divided by the total number of packets received. A packet may be deemed erroneous if one bit is incorrect as determined by the checksum value. Similarly, a bit error rate may be determined by computing the number of bits that have been altered in a communication due to, for example, noise, distortion, or interference. It may be computed by dividing the number of bit errors by the total number of bits communicated during a predefined time interval. A skilled artisan will know that other techniques for computing latency, RSSI, and/or error rate exist and may be used according to the implementations disclosed herein. In some configurations, a packet may be transmitted to the network device as a component of determining a signal metric.

A first signal measurement may be generated based on the at least one metric at **340.** A signal measurement may refer to a composite score that combines the information obtained from the signal metrics. For example, a high signal strength, low latency, and low error rate signal may receive a high composite score. In some instances, only a single metric may be utilized as a metric of the signal and it may be the first signal measurement. In some instances, the first signal measurement may be based on a QoS or a minimum threshold thereof. A QoS may refer to provisioning priority to different applications or users to guarantee a minimum or specified level of performance. For example, the signal metrics described earlier may be important where the network capacity is limited or insufficient, particularly for streaming certain content types such as multimedia. Multimedia content may be particularly sensitive to data transfer orbit rates, errors, latency, etc.

In some configurations, minimum threshold QoS for content may be determined. Minimum bit rates for content may be preprogrammed. For example, MP3 audio content may require a minimum bit rate of 128kb/s while FLAC content may require a minimum bit rate of 384kb/s. The device may determine that, based on one or more signal measurements, a location is not suitable to play FLAC content but is suitable to play MP3 content. In some instances the device may filter FLAC content from, for example, songs in a music library (e.g., the device may not request from a server FLAC content). A user may ignore the device's recommendation and elect to have FLAC content played regardless of the signal measurement.

The processor may be configured to indicate the first signal measurement using an interface component at **350.** An interface component may include, for example, a LED, an audible sound, text, graphical display, an external output of text, or an external output of a graphical display. For example, the device may be connected to a display or send a signal to another device such as a mobile phone or tablet device to indicate that first signal measurement. In some configurations, one or more LEDs may indicate the first signal measurement. For example, an increasing number of LEDs may be activated the higher a composite score of the first signal measurement.

A determination may be made that the first location is sub-optimal based on the first signal measurement. An optimal location may refer to a location that, for example, satisfies a minimum QoS for a particular content or as specified by the user. An optimal location is not limited to the best or ideal location. It may refer to a relative quality of a signal in a particular environment at a particular time at a particular location.

A first recommendation may be generated based on the determination that the first location is sub-optimal at **360.** The first recommendation may be, for example, an indication to move the device. For example, the device may be programmed or configured with one or more ranges that define the quality of the signal based on the first signal measurement. An LED may be associated with each range. Three ranges may be indicated such as poor, acceptable, and excellent. The LED associated with each range may be a different color (e.g., red for the poor range, yellow for the acceptable range, and green for the excellent range). The first signal measurement may be represented by a composite score and mapped to one of the ranges. One or more LEDs indicating the range may be illuminated based on the range that to which the first signal measurement is mapped. An indication to move the device may be, for example, an illuminated red LED that indicates to the user that the present location is not suitable for the requested action. It may also change the state of the LED, for example, by making it blink to indicate to the user that it is time to move the device. An indication to move the device may also be an explicit instruction displayed by text.

In some configurations the first signal measurement and the first recommendation may be identical. For example, LED indicators for a signal measurement of poor, acceptable, and excellent may be the only information conveyed to an end user. A first signal measurement that is poor may also represent an indication to move the device. Thus, the interface component may be utilized to provide the indication to move the device.

A second signal measurement may be generated based on the analysis of the at least one signal at a second location at **370.** The second signal measurement may be indicated at the second location subsequent to moving the device to the second using the interface component at **380.** The second signal measurement may be generated by the same manner as the first signal measurement. For example, a user may move the device to the second location and press a button on the device that instructs it to perform the second signal measurement. The second location may be a minor adjustment, such as laterally moving the device a few centimeters. A composite score based on the signal metrics may be determined as described earlier. An LED may be illuminated to indicate to the user the second signal measurement.

In some configurations, the device may have a pre-programmed test pattern or a test pattern may be generated based on the environment or user-input constraints/specifications. For example, the device may be pre-programmed to analyze a signal at three different locations. The processor may store a signal measurement to persistent or short-term memory. A signal measurement may be associated with a location and the information may be stored to a database or to local memory. Any of the signal metrics mentioned earlier may be stored and/or associated with a particular signal measurement and/or location. Position may be determined, for example, by GPS. A location may be represented as a receipt of a user input indicating that the device has been moved, irrespective of whether or not the device has, in fact, been moved. In some configurations, a map may be generated of the one or more signal measurements (e.g., any signal measurement generated therefrom), the first location, and the second location. The map may be stored as a table in a database, for example.

An implementation may also measure the effect of the orientation of the device on QoS. For example, a first measurement can correspond to a device orientation that is parallel to the floor, while a second measurement can correspond to a device orientation that is perpendicular to the floor. The results can be displayed to the user as for location and may be used in conjunction with location. In this way, the user may be able to further optimize QoS by changing the orientation of the device appropriately.

The stored locations and signal measurements may be accessible for comparison of one signal measurement and location to a second signal measurement and location. For example, a processor of the device may generate a second recommendation based on the first signal measurement, the first location, the second signal measurement, and the second location. The second recommendation may be an indication of which location, among the locations for which a signal measurement was obtained, has the better signal. If two or more signal measurements from two or more locations are equivalent, an interface component such as a display may indicate that the equivalent signal measurements. In some configurations, the first location tested may be selected as the best location of those locations that were tested. The device's processor, therefore, may determine an optimal location based on the comparison of the first signal measurement and the second signal measurement. As described earlier, the optimal location may not be the best location of those tested (e.g., where two locations have equivalent signal measurements) and it may not be the best location for the particular environment. The selected location may be indicated using the interface component. A recommendation can include the display of an arrow or other directional indicator that shows the direction in which the device may be moved to boost QoS. A recommendation can include a map (e.g., a map of a room, an area, a region, etc.) that shows the device's current location and indicates other locations at which QoS may be better and/or worse.

The first signal measurement and the second signal measurement may not be the first and second signal measurement in a sequence. For example, there may be one or more signal measurements between the first and second signal measurements as described at steps **370** and 395. Similarly, the first location and the second location may not be the first and second location with respect to a sequence of locations.

The foregoing description, for purpose of explanation, has been described with reference to specific implementations. However, the illustrative discussions above are not intended to be exhaustive or to limit implementations of the disclosed subject matter to the precise forms disclosed. Many modifications and variations are possible in view of the above teachings. The implementations were chosen and described in order to explain the principles of implementations of the disclosed subject matter and their practical applications, to thereby enable others skilled in the art to utilize those implementations as well as various implementations with various modifications as may be suited to the particular use contemplated.

## Claims

1. A computer-implemented method comprising:
receiving, by a communication module, at least one signal;
identifying, by a processor, a network device;
receiving, from the communication module, the at least one signal from the network device;
determining at least one metric of the signal selected from: latency, throughput, received signal strength, and error rate;
generating a first signal measurement based on the at least one metric;
indicating the first signal measurement using an interface component;
determining that a first location is sub-optimal based on the first signal measurement;
generating a first recommendation based on the determination that the first location is sub-optimal, where the first recommendation comprises an indication to move the device;
generating a second signal measurement based on the analysis of the at least one signal at a second location; and
indicating the second signal measurement at the second location subsequent to moving the device to the second using the interface component.

2. The method of claim 1, further comprising storing the first signal measurement and the first location.

3. The method of claim 2, further comprising storing the second signal measurement and the second location.

4. The method of claim 3, further comprising generating a second recommendation based on the first signal measurement, the first location, the second signal measurement, and the second location.

5. The method of claim 1, further comprising generating a map of the at least one signal, the first location, and the second location.

6. The method of claim 1, further comprising generating a test pattern.

7. The method of claim 1, further comprising comparing the first signal measurement and the second signal measurement.

8. The method of claim 7, further comprising determining an optimal location based on the comparison of the first signal measurement and the second signal measurement.

9. The method of claim 8, further comprising indicating the optimal location using the interface component.

10. The method of claim 1, further comprising transmitting a packet to the network device.

11. The method of claim 1, further comprising determining a minimum threshold for a quality of service for content.

12. The method of claim 13, further comprising determining that the first location is sub-optimal based on the quality of service for the content.

13. The method of claim 1, wherein the interface component is selected from the group consisting of: a LED, an audible sound, text, graphical display, an external output of text, and an external output of a graphical display.

14. A device comprising means for performing the method of any of claims 1 to 13.

15. A storage medium comprising machine readable instructions stored thereon for causing a computer system to perform a method in accordance with any one of claims 1 to 13.
